# EUROPÄISCHE PATENTSCHRIFT

(11) **EP 2 072 180 B1**
(45) Veröffentlichungstag und Bekanntmachung des Hinweises auf die Patenterteilung: **14.10.2015**
(21) Anmeldenummer: 08019238.8
(22) Anmeldetag: 04.11.2008
(51) Int. Cl.: B23P 21/00, G05B 19/418

(54) **Verfahren zur Montage einer Baugruppe**
Method for mounting an assembly
Procédé pour le montage d'un ensemble

(30) Priorität: 22.12.2007 DE 102007062376
(43) Veröffentlichungstag der Anmeldung: 24.06.2009
(73) Patentinhaber: Dietz-automotive GmbH & Co. KG, 73265 Dettingen unter Teck (DE)
(72) Erfinder: Schweikle, Joachim, 71665 Vaihingen-Enz/Aurich (DE)
(74) Vertreter: Ruckh, Rainer Gerhard

(56) Entgegenhaltungen:
- EP-A- 0 648 580
- DE-A1- 10 122 059
- DE-A1- 10 320 557
- DE-A1- 19 836 557
- JP-A- 5 042 461
- JP-A- 8 294 826
- JP-A- 2003 127 036
- JP-A- 2006 167 829

## Beschreibung

Die Erfindung betrifft ein Verfahren zur Montage von Baugruppen.

Derartige Montageverfahren betreffen generell den Zusammenbau von Baugruppen im Sinne von Funktionsgruppen eines Endprodukts als auch von Endprodukten selbst, wobei die jeweilige Baugruppe aus einer vorgegebenen Anzahl von Einzelteilen in einer bestimmten Folge von Montageschritten zusammengebaut wird.

Derartige Baugruppen können Bestandteile von Endprodukten oder selbst Endprodukte unterschiedlicher Ausprägung sein. Insbesondere können derartige Baugruppen Bestandteile von Kraftfahrzeugen sein. Beispielsweise kann es sich hierbei um Baugruppen für Feststellbremsen, das heißt Handbremsen in Kraftfahrzeugen handeln.

Bekannte automatisierte Montageverfahren, insbesondere im Bereich der Kraftfahrzeugindustrie, arbeiten mit vollautomatisierten Montagelinien, bestehend aus einer Anordnung von Montagerobotern. Mit derartigen Verfahren kann der Personaleinsatz erheblich reduziert werden, jedoch ist auf der anderen Seite ein erheblicher konstruktiver und finanzieller Aufwand erforderlich, da derartige Montageroboter sehr große Investitionen darstellen. Ein weiterer Nachteil derartiger vollautomatisierter Montagelinien besteht darin, dass diese hinsichtlich Änderungen von Montagevorgängen sehr unflexibel sind. Bei Bildung von Varianten oder Abwandlungen von zu erstellenden Baugruppen ist es oft erforderlich, die Abfolge von Montageschritten oder die Montageschritte selbst in geeigneter Weise anzupassen und zu modifizieren. Bei Montagelinien mit Montagerobotern ist für eine derartige Anpassung eine umfangreiche Umprogrammierung der Montageroboter oder sogar eine konstruktive Änderung der Montageroboter erforderlich. Die Umrüstung einer solchen Montagelinie ist daher mit einem unerwünscht hohen Zeit- und Kostenaufwand verbunden.

Die DE 103 20 557 A1 betrifft ein Verfahren zur Unterstützung der an einem Werkstattarbeitsplatz auszuführenden Tätigkeiten, wobei der Werkstattarbeitsplatz mindestes einen Arbeitstisch oder Werkstückträger, Werkzeuge und/oder Bauteile umfasst. Hierzu wird der Arbeitsplatz so ausgebildet, dass oberhalb des Arbeitsplatzes eine Bilderzeugungseinrichtung angeordnet wird, die von einem Computer gesteuert starre Bilder der einzelnen Arbeitsfolgen darstellt. Gleichzeitig werden die dazu benötigten Werkzeuge und Bauteile beleuchtet. Mit einer zusätzlich oberhalb angeordneten Kamera kann der Arbeitsplatz weiter hinsichtlich Qualitätskontrolle benutzt werden.

Aus der JP 2006 167829 A ist eine Fertigungseinrichtung bekannt, bei welcher mit Anzeigelampen Behälter angezeigt werden, in welchen für die jeweilige Fertigung benötigte Teile enthalten sind. Die Anzeigelampen werden ausgeschaltet, wenn die Teile entnommen worden sind.

Der Erfindung liegt die Aufgabe zugrunde, ein rationelles und flexibles Verfahren zur Montage von Baugruppen bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Verfahren zur Montage einer Baugruppe umfassend folgende Verfahrensschritte
- Bereitstellen von Einzelteilen in separaten Behältern, wobei jedem Behälter eine Kontroll- und Anzeigeeinheit zugeordnet ist, welche ein
- Anzeigeelement sowie einen Sensor, mittels dessen die Entnahme eines Einzelteils aus dem Behälter kontrolliert wird, aufweist,
- Durchführen von Montageschritten, wobei für jeden Montageschritt das hierfür erforderliche Einzelteil durch Aktivieren des Anzeigeelements am jeweiligen Behälter angezeigt wird und die korrekte Entnahme des Einzelteils aus dem Behälter mittels der Kontroll- und Anzeigeeinheit kontrolliert wird,
- Montage der Baugruppe in einer Montagevorrichtung, wobei durch die einzelnen Montageschritte die Baugruppe in der Montagevorrichtung schrittweise zusammengebaut wird,
- wobei die Montagevorrichtung eine Sensorik aufweist, mittels derer kontrolliert wird, ob die zur Ausbildung der Baugruppe erforderlichen Einzelteile vorhanden sind, und mittels derer geprüft wird, ob alle Einzelteile der Baugruppe in dieser angeordnet sind, wobei mittels der Sensorik zusätzlich die Einbaulagen der Einzelteile geprüft werden.
- und wobei bei Registrieren fehlerhafter Anzahlen und/oder Einbaulagen der Einzelteile das Alarmsignal generiert wird.

Der Grundgedanke der Erfindung besteht somit darin, durch Kontrollvorrichtungen die Abfolge von Montageschritfen, die von einer Bedienperson zur Erstellung einer Baugruppe durchgeführt werden müssen, exakt vorzugeben und zu überwachen, so dass die Montage der Baugruppe von der Bedienperson zwangsgeführt ist und dadurch bedingt nach einem vorgegebenen Ablaufschema reproduzierbar und fehlerfrei durchgeführt wird.

Zu diesen Kontrollvorrichtungen gehören einerseits die Kontroll- und Anzeigeeinheiten, die den Behältern, in welchen separat die zur Erstellung der Baugruppe benötigten Einzelteile gelagert sind, zugeordnet sind. Mittels dieser Kontroll- und Anzeigeeinheiten, die vorzugsweise von einer zentralen Rechnereinheit gesteuert werden, wird kontrolliert, ob die Bedienperson in der richtigen Reihenfolge die zur Durchführung der Montageschritte zur Erstellung der Baugruppe benötigten Einzelteile verwendet.

Diese Kontrolle wird auf einfache Weise dadurch erzielt, dass jede einem Behälter zugeordnete Kontroll- und Anzeigeeinheit ein Anzeigeelement aufweist. Der Bedienperson wird damit das für den jeweils anstehenden Montageschritt benötigte Einzelteil dadurch angezeigt, dass nur das Anzeigeelement, das dem Behälter zugeordnet ist, welches dieses Einzelteil enthält, aktiviert ist, während die Anzeigeelemente aller anderen Kontroll- und Anzeigeeinheiten, mit welchen die restlichen Behälter kontrolliert werden, deaktiviert sind. Besonders vorteilhaft gibt ein aktiviertes Anzeigeelement ein Grünsignal als optisches Signal ab, während die deaktivierten Anzeigeelemente ein Rotsignal abgeben. Mit dieser Anzeige kann bereits mit hoher Sicherheit erreicht werden, dass die Bedienperson das für den anstehenden Montageschritt benötigte Einzelteil herausnimmt.

Die Kontrolle wird dadurch noch komplettiert, dass zudem überwacht wird, ob die Entnahme des angezeigten Einzelteils auch tatsächlich erfolgt. Jede Kontroll- und Anzeigeeinheit weist hierzu neben dem Anzeigeelement auch jeweils einen Sensor auf, der bevorzugt aus einer Lichtschranke besteht und mit dem die Öffnung des jeweiligen Behälters überwacht wird. Dadurch kann erfasst werden, ob die Bedienperson ein Einzelteil auch dem Behälter mit dem aktivierten Anzeigeelement oder fälschlicherweise aus einem anderen Behälter entnimmt.

Nur bei einer festgestellten Entnahme eines Einzelteils aus dem richtigen Behälter wird der nächste Montageschritt freigegeben und dann wieder das hierfür benötigte Einzelteil durch Aktivieren des Anzeigeelements am jeweiligen Behälter angezeigt.

Neben dieser kontrollierten und überwachten Entnahme der Einzelteile für die einzelnen Montageschritte wird erfindungsgemäß zudem überwacht und kontrolliert, ob die Einzelteile zur Montage der Baugruppe richtig montiert, das heißt bearbeitet und zusammengebaut werden. Diese Überwachungsfunktion übernimmt die Montagevorrichtung. Diese Montagevorrichtung bildet eine Aufnahme, in welcher die Baugruppe sukzessive in den einzelnen Montageschritten unter Verwendung der Einzelteile zusammengebaut wird. Dabei wird mit der Sensorik, vorzugsweise einer mehrstrahligen Lichtschrankenanordnung, das Vorhandensein der Einzelteile und gegebenenfalls auch deren korrekte Einbaulagen überprüft.

Im einfachsten Fall wird diese Kontrolle einmalig, am Ende des Montagevorgangs, durchgeführt. Alternativ kann diese Kontrolle auch fortlaufend zur Überwachung mehrerer oder aller Montageschritte durchgeführt werden.

Das erfindungsgemäße Verfahren kann auch derart modifiziert sein, dass anstelle einer Montagevorrichtung mehrere Montagevorrichtungen eingesetzt werden, um den korrekten Zusammenbau von Unterbaugruppen zu überwachen. Bei dieser Variante sind sämtliche Montagevorrichtungen mit einer Sensorik ausgestattet, um die jeweils dort eingebauten Einzelteile hinsichtlich Anzahl und Einbaulage zu kontrollieren.

Generell erfolgt bei dem erfindungsgemäßen Verfahren die Kontrolle der Montage der Baugruppe derart, dass mittels der Kontroll- und Anzeigeeinheiten an den Behältern und der Sensorik an der oder den Montagevorrichtungen die für die Montage verwendeten Einzelteile, die mit den Einzelteilen durchgeführten Montageschritte kontrolliert werden, wobei ein nächster Montageschritt immer nur dann freigegeben wird, wenn der vorige Montageschritt korrekt abgearbeitet wurde. Bei Auftreten eines Fehlers bei der Entnahme von Einzelteilen aus den Behältern oder bei Einbau der Einzelteile in der oder einer Montagevorrichtung wird, bevorzugt über die Rechnereinheit, ein Alarmsignal generiert. Vorzugsweise ist das Alarmsignal als Stoppsignal ausgebildet, durch welches der Montagevorgang unterbrochen wird. Dadurch werden Fehler bei der Montage der Baugruppe mit hoher Sicherheit vermieden.

In einer besonders vorteilhaften Ausführungsform wird der Bedienperson der Montagevorgang mittels eines zweckmäßig fortlaufend wiederholten Films visualisiert, wodurch auch nur angelernte Bedienpersonen den Montagevorgang ohne weitere Anleitung fehlerfrei durchführen können.

Das erfindungsgemäße Verfahren kann im Vergleich zu vollautomatisierten, mit Montagerobotern arbeitenden Montagelinien mit erheblich reduziertem Konstruktions- und Kostenaufwand durchgeführt werden. Durch die erfindungsgemäßen Überwachungsfunktionen ist trotz der Durchführung der Montage durch Bedienpersonen eine hohe Reproduzierbarkeit und eine geringe Fehlerwahrscheinlichkeit bei der Erstellung der Baugruppe gewährleistet, da Fehler aufgrund menschlichen Versagens durch die implementierten Kontroll- und Überwachungsfunktionen sofort aufgedeckt werden können. Da die Kontrollvorrichtungen zudem die einzelnen Montageschritte nicht nur kontrollieren, sondern auch eine Visualisierung der Montageschritte erfolgt, wird erreicht, dass die Baugruppe mit kurzen Montagezeiten auch von ungeübtem Personal erstellt werden kann.

Ein weiterer wesentlicher Vorteil des erfindungsgemäßen Verfahrens besteht darin, dass Anpassungen an Veränderungen der Baugruppe und/oder des Montagevorgangs schnell und mit äußerst geringem Aufwand durchgeführt werden. Wird beispielsweise eine Variation der zu erstellenden Baugruppe dahingehend durchgeführt, dass im Vergleich zur alten Baugruppe geänderte Einzelteile benötigt werden, so kann dies bei dem erfindungsgemäßen Verfahren einfach dadurch berücksichtigt werden, dass in den Behältern andere Einzelteile zur Verfügung gestellt werden. Das Prinzip der Entnahmekontrolle mittels der Kontroll- und Anzeigeeinheit bleibt hierbei unverändert. Änderungen der Abfolge der Verwendung von Einzelteilen können einfach dadurch berücksichtigt werden, dass über die Rechnereinheit eine geänderte Abfolge der Aktivierung der Anzeigeelemente der Kontroll- und Anzeigeeinheit durchgeführt wird. Auch die Sensorik der oder einer Montagevorrichtung kann einfach adaptiert werden um Variationen beim Zusammenbau der Baugruppe zu berücksichtigen.

Die Erfindung wird im Nachstehenden anhand der Zeichnungen erläutert. Es zeigen:
- Figur 1:: Schematische Darstellung eines Montageplatzes zur Durchführung des erfindungsgemäßen Verfahrens.
- Figur 2:: Draufsicht auf die Montagevorrichtung für die Anordnung gemäß Figur 1.

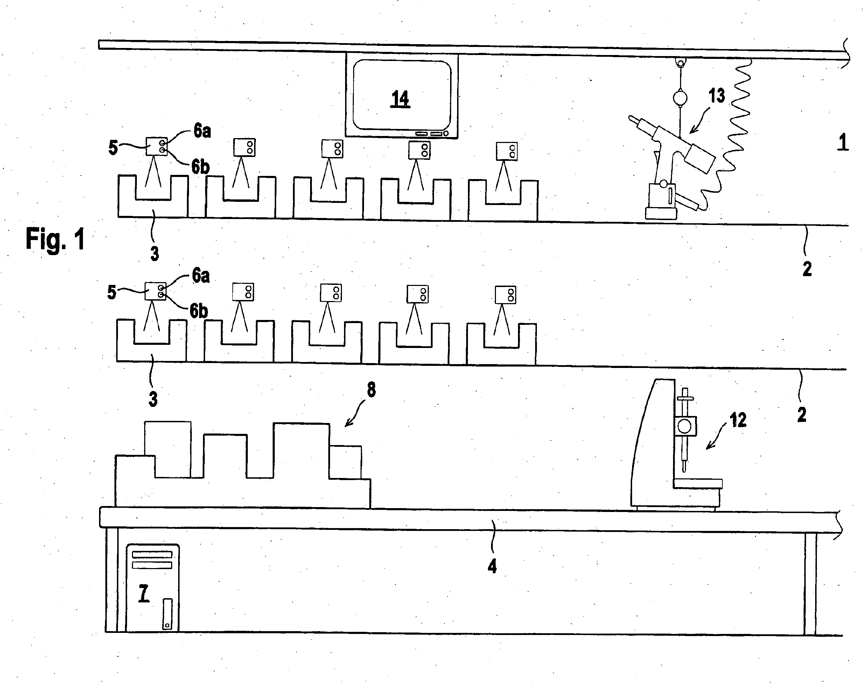

Figur 1 zeigt einen Montageplatz 1 für die Montage eines Handbremshebels als Baugruppe einer Handbremse. Auf Regalen 2 sind in mehreren Reihen Behälter 3 angeordnet. In jedem Behälter 3 ist eine Sorte von Einzelteilen gelagert, die zur Erstellung der Baugruppe benötigt sind. Figur 1 zeigt eine Draufsicht auf die Vorderseiten der Regale 2, die oberhalb eines Tisches 4 in Griffweite einer nicht dargestellten Bedienperson angeordnet sind. Die Regale 2 werden von der offenen Rückseite mit den Behältern 3 bestückt. Die Behälter 3, die im vorliegenden Fall identisch ausgebildet sind, sind an ihren Oberseiten offen, so dass die vor dem Tisch 4 stehende Bedienperson wahlweise ein Einzelteil aus einem der Behälter 3 entnehmen kann.

Jedem Behälter 3 ist eine Kontroll- und Anzeigeeinheit zugeordnet, die aus einer Lichtschranke 5 mit einem Anzeigeelement in Form einer grünen Leuchtdiode 6a und einer roten Leuchtdiode 6b besteht. Die Lichtschranke 5 ist oberhalb des jeweiligen Behälters 3 so angeordnet, dass deren Lichtstrahlen 11 auf den offenen Frontbereich gerichtet sind. Greift die Bedienperson in den Behälter 3, um daraus ein Einzelteil zu entnehmen, so wird der Strahlengang der Lichtstrahlen 11 unterbrochen, wodurch eine Signaländerung des Ausgangssignals der Lichtschranke 5 erhalten wird.

Die Ansteuerung der Kontroll- und Anzeigeeinheit sowie die Auswertung der Ausgangssignale der Lichtschranken 5 erfolgt in einer zentralen Rechnereinheit 7, die auch die zentrale Steuerung der übrigen Elektronikkomponenten des Montageplatzes 1 übernimmt.

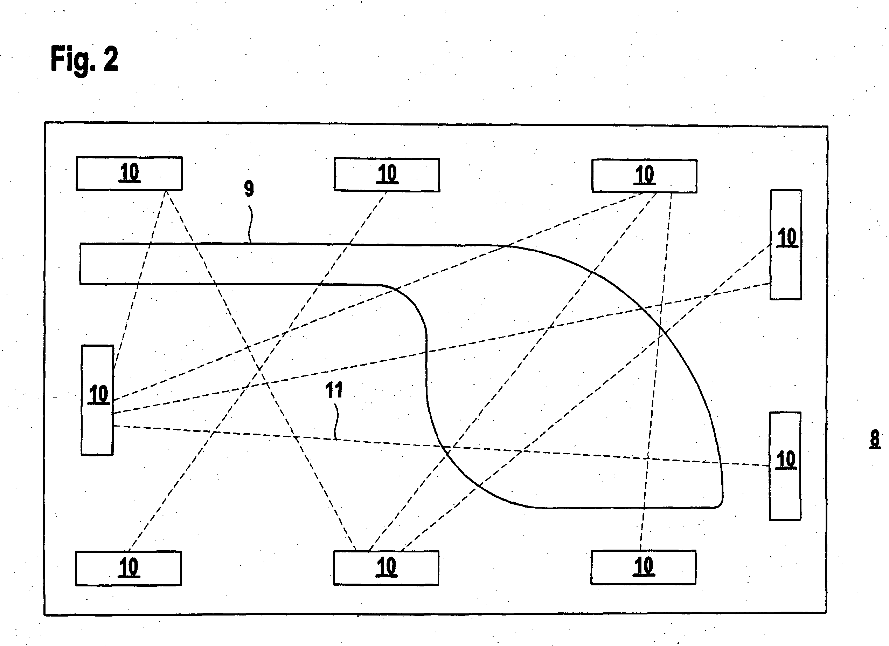

Auf dem Tisch 4 ist eine Montagevorrichtung 8 gelagert, die in Figur 2 in einer Draufsicht dargestellt ist. Die Montagevorrichtung 8 umfasst eine an ihrer Oberseite offene Aufnahme, in welche, wie aus Figur 2 ersichtlich, eine Hebelschale 9 als Komponente des Handbremshebels einlegbar ist. Die Montagevorrichtung 8 umfasst weiter eine Lichtschrankenanordnung mit mehreren Sende- und Empfangseinheiten 10. Prinzipiell kann die Lichtschrankenanordnung auch aus separaten Sendern und Empfängern bestehen. Mit den Sende- und Empfangseinheiten 10 wird, wie in Figur 2 dargestellt, ein Netz von vorzugsweise in unterschiedlichen Ebenen verlaufenden Lichtstrahlen 11 generiert. Vorzugsweise werden von der Lichtschrankenanordnung Lichtstrahlen 11 im sichtbaren Wellenlängenbereich emittiert, so dass das Netz der Lichtstrahlen 11 von der Bedienperson gesehen werden kann.

Der Montageplatz 1 umfasst weiterhin Werkzeuge zur manuellen Bearbeitung von Einzelteilen. Im vorliegenden Fall sind als Werkzeuge eine Kniehebelpresse 12 sowie eine Nietpistole 13 vorgesehen.

Der Montageplatz 1 wird komplettiert durch einen Bildschirm 14. Über den Bildschirm 14 wird der durchzuführende Montagevorgang in Form eines fortlaufend wiederholten Films visualisiert.

Bei dem durchzuführenden Montagevorgang wird zunächst eine Hebelschale 9 des Handbremshebels in einer vorgegebenen Sollposition in der Aufnahme der Montagevorrichtung 8 so gelagert, dass deren Innenraum offen freiliegt. Im nachfolgenden Montageschritt werden sukzessive Einzelteile aus den Behältern 3 entnommen und dann, gegebenenfalls nach einer Bearbeitung mit den Werkzeugen, in der Hebelschale 9 in vorgegebenen Sollpositionen eingebaut. Bei diesen Einzelteilen handelt es sich insbesondere um Komponenten einer Festsetzeinrichtung der Handbremse, mittels derer der Handbremshebel in einer bestimmten Schwenkposition an einem Lagerbock als weiterem Bestandteil der Handbremse fixierbar ist. Zu einer derartigen Festsetzeinrichtung gehören Einzelteile wie eine Sperrklinke, ein Sperrsegment zum Einrasten der Sperrklinke, und eine Druckfeder, die die Sperrklinke gegen das Sperrsegment drückt. Weitere Einzelteile sind eine im Handbremshebel geführte Druckstange und ein daran angeordneter Druckknopf, welche zum Lösen der Handbremse benötigt werden. Sobald alle Einzelteile in der Hebelschale 9 eingebaut sind, wird auf diese eine zweite Hebelschale 9 aufgesetzt und verbunden, wodurch die Baugruppe fertig gestellt ist.

Mit der von der Rechnereinheit 7 gesteuerten Kontroll- und Anzeigeeinheit sowie mit der Lichtschrankenanordnung der Montagevorrichtung 8 wird der gesamte, in einzelne Montageschritte aufgelöste Montagevorgang, vorgegeben.

Weiterhin werden sämtliche vorgegebenen, von der Bedienperson durchzuführenden Montageschritte überwacht.

Die Kontroll- und Anzeigeeinheiten an den Behältern 3 dienen jeweils zur Anzeige des jeweiligen Einzelteils, welches für den im Montageprozess als nächsten anstehenden Montageschritt benötigt wird. Hierzu wird nur das Anzeigeelement der Kontroll- und Anzeigeeinheit, das den Behälter 3, in welchem sich das benötigte Einzelteil befindet, aktiviert, während die Anzeigeelemente aller anderen Kontroll- und Anzeigeeinheiten deaktiviert sind. Ein Anzeigeelement ist dabei aktiviert, indem nur die grüne Leuchtdiode 6a leuchtet. Dagegen leuchtet bei einem deaktivierten Anzeigeelement nur die rote Leuchtdiode 6b.

Durch die alleinige Aktivierung des Anzeigeelements der Kontroll- und Anzeigeeinheit an dem Behälter 3, welcher das für den Montageschritt benötigte Einzelteil enthält, wird dem Bediener dieses Einzelteil eindeutig angezeigt.

Die hierauf zu erfolgende Entnahme des Einzelteils aus dem Behälter 3 wird mit den Lichtschranken 5 der Kontroll- und Anzeigeeinheit kontrolliert. Greift die Bedienperson in einen falschen Behälter 3, so spricht die Kontroll- und Anzeigeeinheit dieses Behälters 3 an, das heißt die Lichtschranke 5 dieser Kontroll- und Anzeigeeinheit generiert ein entsprechendes Ausgangssignal. Daraufhin wird in der Rechnereinheit 14 ein Alarmsignal generiert, welches im vorliegenden Fall als Stoppsignal ausgebildet ist, mit dem der Montagevorgang unterbrochen wird. In diesem Fehlerfall muss, vorzugsweise von einer übergeordneten Stelle, der Montagevorgang neu freigegeben werden.

Wird dagegen von der Bedienperson das Einzelteil korrekt aus dem Behälter 3 entnommen, dessen Anzeigeelement aktiviert ist, so wird diese Entnahme mit der Lichtschranke 5 der diesem Behälter 5 zugeordneten Kontroll- und Anzeigeeinheit registriert, worauf die Rechnereinheit 14 den nächsten Montageschritt freigibt und hierzu das für den nächsten Montageschritt benötigte Einzelteil durch alleinige Aktivierung des Anzeigeelements der Kontroll- und Anzeigeeinheit, die dem Behälter 3 mit diesen Einzelteilen zugeordnet ist, anzeigt.

Bei den einzelnen Montageschritten wird zudem das jeweils benötigte Einzelteil, gegebenenfalls nach einer mechanischen Bearbeitung mit den Werkzeugen, in der in der Montagevorrichtung 8 liegenden Hebelschale 9 eingebaut. Die eingebauten Einzelteile werden hinsichtlich Anzahl und Einbaulage mit der Lichtschrankenanordnung geprüft und kontrolliert.

Prinzipiell kann diese Kontrolle nach jedem Montageschritt erfolgen. Im vorliegenden Fall erfolgt diese Kontrolle einmalig dann, wenn alle Einzelteile in der Hebelschale 9 eingebaut sind. Dann wird mit der Lichtschrankenanordnung der Montagevorrichtung 8 eine Endkontrolle durchgeführt, ob alle Einzelteile korrekt in der Hebelschale 9 eingebaut wurden, wobei hierzu das Muster der Unterbrechungen der Lichtstrahlen 11 der Lichtschrankenanordnung mit einem Sollwert verglichen wird.

Wird ein Fehler im Einbau der Einzelteile detektiert, wird das Alarmsignal in Form des Stoppsignals generiert.

Wird ein korrekter Einbau der Einzelteile registriert, wird dagegen der nächste Montageschritt freigegeben. In diesem nächsten Montageschritt erfolgt das Aufsetzen einer zweiten Hebelschale auf die in der Montagevorrichtung 8 liegende, die eingebauten Einzelteile enthaltende Hebelschale 9, wobei die beiden Hebelschalen 9 miteinander verbunden werden.

Damit ist die Baugruppe des Handbremshebels fertiggestellt. In einem weiteren, manuell durchgeführten Montageschritt wird zur Herstellung der Handbremse als Endprodukt der Handbremshebel auf einem Lagerbock befestigt, so dass der Handbremshebel am Lagerbock schwenkbar gelagert ist.

In einem letzten, ebenfalls manuell durchgeführten Montageschritt werden ein Griff und eine Blende auf dem Handbremshebel befestigt. In diesem Montageschritt erfolgt eine applikationsspezifische Ausbildung der Handbremse, da je nach Applikation Griffe und Blenden mit unterschiedlichen Materialien, Oberflächenbeschaffenheiten und Farben am Handbremshebel fixiert werden können.

### Bezugszeichenliste

- (1): Montageplatz
- (2): Regal
- (3): Behälter
- (4): Tisch
- (5): Lichtschranke
- (6a): grüne Leuchtdiode
- (6b): rote Leuchtdiode
- (7): Rechnereinheit
- (8): Montagevorrichtung
- (9): Hebelschale
- (10): Sende- und Empfangseinheit
- (11): Lichtstrahl
- (12): Kniehebelpresse
- (13): Nietpistole
- (14): Bildschirm

## Patentansprüche

1. Verfahren zur Montage einer Baugruppe umfassend folgende Verfahrensschritte
- Bereitstellen von Einzelteilen in separaten Behältern (3), wobei jedem Behälter (3) eine Kontroll- und Anzeigeeinheit zugeordnet ist, welche ein Anzeigeelement sowie einen Sensor, mittels dessen die Entnahme eines Einzelteils aus dem Behälter (3) kontrolliert wird, aufweist,
- Durchführen von Montageschritten, wobei für jeden Montageschritt das hierfür erforderliche Einzelteil durch Aktivieren des Anzeigeelements am jeweiligen Behälter (3) angezeigt wird und die korrekte Entnahme des Einzelteils aus dem Behälter (3) mittels der Kontroll- und Anzeigeeinheit kontrolliert wird,
- Montage der Baugruppe in einer Montagevorrichtung (8), wobei durch die einzelnen Montageschritte die Baugruppe in der Montagevorrichtung (8) schrittweise zusammengebaut wird,
- wobei die Montagevorrichtung (8) eine Sensorik aufweist, mittels derer kontrolliert wird, ob die zur Ausbildung der Baugruppe erforderlichen Einzelteile vorhanden sind, und mittels derer geprüft wird, ob alle Einzelteile der Baugruppe in dieser angeordnet sind, wobei mittels der Sensorik zusätzlich die Einbaulagen der Einzelteile geprüft werden.
- und wobei bei Registrieren fehlerhafter Anzahlen und/oder Einbaulagen der Einzelteile ein Alarmsignal generiert wird.

2. Verfahren nach Anspruch 1, **dadurch gekennzeichnet, dass** die Montage der Baugruppe mittels einer Rechnereinheit (7) gesteuert und kontrolliert wird.

3. Verfahren nach einem der Ansprüche 1 oder 2, **dadurch gekennzeichnet, dass** für jeden Montageschritt die Anzeigeelemente aller Behälter (3) mit Einzelteilen, die für den Montageschritt nicht benötigt werden, deaktiviert sind.

4. Verfahren nach Anspruch 3, **dadurch gekennzeichnet, dass** mittels der Rechnereinheit (14) für jeden Montageschritt das jeweils erforderliche Einzelteil dadurch visualisiert wird, dass das Anzeigeelement des Behälters (3), in dem diese Einzelteile liegen, dadurch aktiviert ist, dass dieses ein Grünsignal abgibt und die Anzeigeelemente aller anderen Behälter (3) dadurch deaktiviert sind, dass diese ein Rotsignal abgeben.

5. Verfahren nach einem der Ansprüche 1 bis 4, **dadurch gekennzeichnet, dass** eine korrekte Entnahme eines Einzelteils aus einem Behälter (3) nur möglich ist, wenn dessen Anzeigeelement aktiviert ist.

6. Verfahren nach Anspruch 5, **dadurch gekennzeichnet, dass** für den Fall, dass in der Kontroll- und Anzeigeeinheit eines Behälters (3) eine korrekte Entnahme eines Einzelteils festgestellt wird, das Anzeigeelement dieses Behälters (3) deaktiviert wird und in der Rechnereinheit (7) der nächste Montageschritt freigegeben wird, wobei hierzu das Anzeigeelement des Behälters (3) aktiviert wird, der das für diesen Montageschritt benötigte Einzelteil enthält.

7. Verfahren nach einem der Ansprüche 5 oder 6, **dadurch gekennzeichnet, dass** für den Fall, dass in einer Kontroll- und Anzeigeeinheit eines Behälters (3) eine nicht korrekte Entnahme eines Einzelteils festgestellt wird, in der Rechnereinheit (14) ein Alarmsignal generiert wird.

8. Verfahren nach Anspruch 7, **dadurch gekennzeichnet, dass** das Alarmsignal ein Stoppsignal bildet, mittels dessen der Montagevorgang unterbrochen wird.

9. Verfahren nach einem der Ansprüche 1 bis 8, **dadurch gekennzeichnet, dass** die Sensoren der Kontroll- und Anzeigeeinheit jeweils von einer Lichtschranke (5) gebildet sind.

10. Verfahren nach einem der Ansprüche 1 bis 9, **dadurch gekennzeichnet, dass** die Sensorik der Montagevorrichtung (8) eine Lichtschrankenanordnung ist.

11. Verfahren nach einem der Ansprüche 1 bis 10, **dadurch gekennzeichnet, dass** bei der Montage einer Baugruppe mehrere Montagevorrichtungen (8) eingesetzt werden, wobei in den einzelnen Montagevorrichtungen (8) Unterbaugruppen montiert werden.

12. Verfahren nach einem der Ansprüche 1 bis 11, **dadurch gekennzeichnet, dass** die Baugruppe ein Endprodukt ist.

13. Verfahren nach einem der Ansprüche 1 bis 13, **dadurch gekennzeichnet, dass** die einzelnen Montageschritte mittels eines Films dargestellt werden wobei der Film laufend wiederholt wird.

## Claims

1. Method of assembling an assembly comprising the following method steps:
- providing individual parts in separate containers (3), wherein associated with each container (3) is a checking and indicating unit which comprises an indicating element as well as a sensor, by means of which removal of an individual part from the container (3) is checked,
- carrying out assembling steps, wherein the individual part required for each assembling step is indicated by activation of the indicating element at the respective container (3) and the correct removal of the individual part from the container (3) is checked by means of the checking and indicating unit,
- assembling the assembly in an assembling device (8), wherein the assembly is assembled in steps in the assembling device (8) by the individual assembling steps,
- wherein the assembling device (8) comprises a sensor system by means of which it is checked whether the individual parts required for construction of the assembly are present and by means of which it is checked whether all individual parts of the assembly are arranged therein, wherein in addition the installation positions of the individual parts are checked by means of the sensor, and
- wherein an alarm signal is generated if faulty numbers and/or installation positions of the individual parts are registered.

2. Method according to claim 1, **characterised in that** the assembling of the assembly is controlled and checked by means of a computer unit (7).

3. Method according to one of claims 1 and 2, **characterised in that** for each assembling step the indicating elements of all containers (3) with individual parts not needed for the assembling step are deactivated.

4. Method according to claim 3, **characterised in that** the individual part respectively required for each assembling step is visualised by means of the computer unit (14) in such a manner that the indicating element of the container (3) in which these individual parts lie is activated so that this issues a green signal and the indicating elements of all other containers (3) are deactivated so that these issue a red signal.

5. Method according to any one of claims 1 to 4, **characterised in that** correct removal of an individual part from a container (3) is possibly only when the indicating element thereof is activated.

6. Method according to claim 5, **characterised in that** for the case that correct removal of an individual part is established in the checking and indicating unit of a container (3) the indicating element of this container (3) is deactivated and the next assembling step is released in the computer unit (3), wherein for that purpose the indicating element of the container (3) containing the individual part needed for this assembling step is activated.

7. Method according to one of claims 5 and 6, **characterised in that** for the case that incorrect removal of an individual part is established in a controlling and indicating unit of a container (3) an alarm signal is generated in the computer unit (14).

8. Method according to claim 7, **characterised in that** the alarm signal forms a stop signal by means of which the assembling process is interrupted.

9. Method according to any one of claims 1 to 8, **characterised in that** the sensors of the checking and indicating unit are each formed by a light barrier (5).

10. Method according to any one of claims 1 to 9, **characterised in that** the sensor system of the assembling device (8) is a light barrier arrangement.

11. Method according to any one of claims 1 to 10, **characterised in that** a plurality of assembling devices (8) is used for assembling an assembly, wherein subassemblies are assembled in the individual assembling devices (8).

12. Method according to any one of claims 1 to 11, **characterised in that** the assembly is an end product.

13. Method according to any one of claims 1 to 13, **characterised in that** the individual assembling steps are illustrated by means of a film, wherein the film is repeated continuously.

## Revendications

1. Procédé de montage d'un groupe structurel, incluant les étapes opératoires suivantes :
- tenue en attente de pièces individuelles dans des réceptacle distincts (3), une unité de contrôle et d'affichage, associée à chaque réceptacle (3), étant dotée d'un élément d'affichage, ainsi que d'un capteur au moyen duquel le prélèvement d'une pièce individuelle hors dudit réceptacle (3) est contrôlé,
- exécution d'étapes de montage, sachant que, pour chaque étape de montage, la pièce individuelle requise à cette fin est affichée par activation de l'élément d'affichage sur le réceptacle (3) considéré, et le prélèvement correct de la pièce individuelle hors dudit réceptacle (3) est contrôlé au moyen de l'unité de contrôle et d'affichage,
- montage du groupe structurel dans un dispositif de montage (8), ledit groupe structurel étant assemblé progressivement dans ledit dispositif de montage (8), par les étapes individuelles de montage,
- le dispositif de montage (8) étant muni d'un système de détection au moyen duquel s'opère un contrôle de la présence des pièces individuelles requises pour réaliser le groupe structurel, et au moyen duquel il est vérifié si toutes les pièces individuelles dudit groupe structurel se trouvent dans ce dernier, les positions d'intégration desdites pièces individuelles étant additionnellement vérifiées au moyen dudit système de détection,
- et un signal d'alarme étant engendré en cas d'enregistrement de nombres et/ou de positions d'intégration erroné(e)s desdites pièces individuelles.

2. Procédé selon la revendication 1, **caractérisé par le fait que** le montage du groupe structurel est commandé et contrôlé au moyen d'une unité de calcul (7).

3. Procédé selon l'une des revendications 1 ou 2, **caractérisé par** une désactivation, pour chaque étape de montage, des éléments d'affichage de tous les réceptacles (3) renfermant des pièces individuelles non nécessaires à ladite étape de montage.

4. Procédé selon la revendication 3, **caractérisé par le fait que** la pièce individuelle respectivement requise est visualisée au moyen de l'unité de calcul (7), pour chaque étape de montage, par activation de l'élément d'affichage du réceptacle (3) dans lequel cette pièce individuelle est située, du fait que ledit élément émet un signal au vert, les éléments d'affichage de tous les autres réceptacles (3) étant désactivés du fait qu'ils émettent un signal au rouge.

5. Procédé selon l'une des revendications 1 à 4, **caractérisé par le fait qu'**un prélèvement correct d'une pièce individuelle, hors d'un réceptacle (3), est possible uniquement lorsque l'élément d'affichage de ce dernier est activé.

6. Procédé selon la revendication 5, **caractérisé par le fait que**, pour le cas où un prélèvement correct d'une pièce individuelle est constaté dans l'unité de contrôle et d'affichage d'un réceptacle (3), l'élément d'affichage de ce réceptacle (3) est désactivé et l'étape de montage suivante est autorisée dans l'unité de calcul (7), avec activation, à cet effet, de l'élément d'affichage du réceptacle (3) renfermant la pièce individuelle nécessaire à cette étape de montage.

7. Procédé selon l'une des revendications 5 ou 6, **caractérisé par le fait qu'**un signal d'alarme est engendré, dans l'unité de calcul (7), pour le cas où un prélèvement incorrect d'une pièce individuelle est constaté dans l'unité de contrôle et d'affichage d'un réceptacle (3).

8. Procédé selon la revendication 7, **caractérisé par le fait que** le signal d'alarme constitue un signal d'arrêt au moyen duquel le processus de montage est interrompu.

9. Procédé selon l'une des revendications 1 à 8, **caractérisé par le fait que** les capteurs de l'unité de contrôle et d'affichage sont respectivement formés d'une barrière photoélectrique (5).

10. Procédé selon l'une des revendications 1 à 9, **caractérisé par le fait que** le système de détection du dispositif de montage (8) est un ensemble de barrières photoélectriques.

11. Procédé selon l'une des revendications 1 à 10, **caractérisé par le fait que** plusieurs dispositifs de montage (8) sont employés lors du montage d'un groupe structurel, des sous-groupes structurels étant montés dans les dispositifs de montage (8) individuels.

12. Procédé selon l'une des revendications 1 à 11, **caractérisé par le fait que** le groupe structurel est un produit final.

13. Procédé selon l'une des revendications 1 à 12, **caractérisé par le fait que** les étapes de montage individuelles sont visualisées au moyen d'un film, ledit film étant répété en continu.
